# EUROPEAN PATENT APPLICATION

(11) **EP 4 711 220 A1**
(43) Date of publication of application: **18.03.2026**
(21) Application number: 24199624.8
(22) Date of filing: 11.09.2024
(51) Int. Cl.: B60T 13/74, F16D 65/18, F16D 121/24, F16D 125/20, F16D 125/34

(54) **ELECTRO-MECHANICAL ACTUATOR ASSEMBLY FOR ACTUATING A BRAKE ACTUATOR, BRAKE ASSEMBLY, VEHICLE AND METHOD FOR A FORCE FEEDBACK CONTROL FOR THE ELECTRO-MECHANICAL ACTUATOR ASSEMBLY**

(71) Applicant: KB Intellectual Property GmbH & Co. KG, 82049 Pullach (DE)
(72) Inventor: SZABO, Gergely, 1125 Budapest (HU); LÖRINCZI, Ottó Botond, 1038 Budapest (HU); KOKREHEL, Csaba, 1119 Budapest (HU); HÖS, Levente, 1047 Budapest (HU); SZABO, Janos, 1101 Budapest (HU)

(57) **Abstract**

The present invention relates to an electro-mechanical actuator assembly (1) for actuating a brake actuator (20), comprising:
an actuation mechanism (3, 6) configured to convert a rotational driving movement into a translational driven movement in a direction of a first longitudinal axis (L1), and
a transfer mechanism (4) operatively coupled to the actuation mechanism (3, 6) to receive and transfer the translational driven movement at least in the direction of the first longitudinal axis (L1),
wherein the transfer mechanism (4) comprises at least one pushing member (4) having a pushing member pivot portion (4c) configured to allow a tilting movement of the pushing member (4) about a pivot axis (17) inclined to the first longitudinal axis (L1) and a pushing member connecting portion (4d) configured to connect with or contact the brake actuator (20), the pushing member (4) extends from the pushing member pivot portion (4c) to the pushing member connecting portion (4d), and
wherein the pushing member (4) comprises a force sensor (31, 31') configured to detect an actuating force in at least one direction.

## Description

The present invention relates to an electro-mechanical actuator assembly for actuating a brake actuator, a brake assembly for a vehicle comprising such electro-mechanical actuator assembly, and a respective vehicle. The present invention further relates to a method for a force feedback control for electro-mechanical actuator assembly and or a respective brake assembly, a respective computer program product and a respective computer-readable storage medium.

With respect to an electro-mechanical actuator assembly for actuating a brake actuator such an electro-mechanical actuator assembly to actuate a caliper, for example, a caliper of floating caliper foundation brakes, a pushing member allowing a tilting movement is used to transfer a translational movement causing an actuating force to a tilting movement of a respective brake actuator. Accordingly, a pushing member connecting portion of the pushing member operatively connected to the brake actuator is urged by the translational movement in connection with the tilting movement of the brake actuator to follow a curved trajectory.

For a force monitoring of the actuating force, for example, for a force feedback control, a pressure based measurement as per pneumatic actuator assemblies is not applicable to electro-mechanical actuator assemblies. Further, the above translational movement, the curved trajectory of the pushing member connecting portion and the tilting movement of the brake actuator provide an angle variance throughout the trajectory.

It is an object of the present invention to allow a sufficiently accurate determination of an actuating force.

The object is solved by the subject-matter of the independent claims. Further aspects of the present invention are subject to the dependent claims.

According to the present invention, an electro-mechanical actuator assembly for actuating a brake actuator comprises an actuation mechanism configured to convert a rotational driving movement into a translational driven movement in a direction of a first longitudinal axis, and a transfer mechanism operatively coupled to the actuation mechanism to receive and transfer the translational driven movement at least in the direction of the first longitudinal axis. The transfer mechanism comprises at least one pushing member having a pushing member pivot portion configured to allow a tilting movement of the pushing member about a pivot axis inclined to the first longitudinal axis and a pushing member connecting portion configured to connect with or contact the brake actuator, the pushing member extends from the pushing member pivot portion to the pushing member connecting portion. The pushing member comprises a force sensor configured to detect an actuating force in at least one direction.

For example, the pushing member may be a push rod, axially driven by the actuation mechanism in the direction of the first longitudinal direction to move a brake actuator, such as a brake lever, in a braking direction. The brake actuator moved in the braking direction actuates a brake or braking member, such as a brake caliper, e.g. a floating caliper, to brake a brake disc. A brake lever as the brake actuator may thereby be rotated about a pivot axis extending in a direction inclined, particularly substantially perpendicular, to the first longitudinal axis, but not intersecting the first longitudinal axis and thereby distanced therefrom. The pushing member comprises the pushing member connecting portion to provide an engaging interface with the brake actuator. Accordingly, the brake actuator and the pushing member each comprise an engaging interface configured to engage with each other such that the pushing member is engaged with the brake actuator during a braking movement. Since the brake actuator rotates about the pivot axis, the interface of the brake actuator moves along a curved trajectory. Accordingly, the pushing member in engagement with the brake actuator comprises the pushing member pivot portion to allow a tilting movement of the pushing member about a respective pivot axis inclined, particularly substantially perpendicular, to the first longitudinal axis. The pivot axis of the pushing member is preferably substantially in parallel to the pivot axis of the brake actuator. Here and in the following, the term "substantially" generally relates to tolerances in manufacturing and/or assembling as well as any other slight deviations that do not interfere with basic principles provided by respective configurations.

Due to the actuation mechanism configured to convert a rotational driving movement into a translational driven movement in the direction of the first longitudinal axis, and the transfer mechanism operatively coupled to the actuation mechanism to receive and transfer the translational driven movement at least in the direction of the first longitudinal axis, the actuation mechanism is capable of being retrofitted in a brake assembly when exchanging a linear drive with a rotary drive within a given brake actuator and/or brake configuration. Further the ability of the pushing member to provide a tilting movement allows to reduce loads on the pushing member, which may otherwise result in deformations or other damages of the pushing member or components subsequent thereof in a direction away from the brake actuator, and/or on the brake actuator.

The actuation mechanism may be a spindle-spindle nut mechanism, preferably a recirculating ball spindle mechanism. A spindle of the spindle-spindle nut mechanism may extend along the first longitudinal axis and may be rotationally supported about the first longitudinal axis while being axially fixed. Further, the spindle nut may be configured to be axially moveable with respect to the first longitudinal axis while being rotationally fixed.

For example, the spindle-spindle nut mechanism is a recirculating ball-spindle based actuator, wherein the spindle is extending in the direction of the first longitudinal axis, preferably coaxially therewith, and is rotationally supported by at least one spindle bearing to allow a rotational movement of the spindle about the first longitudinal axis or an axis in parallel to the first longitudinal axis but keeping the spindle axially stationary with respect to the direction of the first longitudinal axis. However, in other embodiments, the spindle-spindle nut mechanism may be another actuation mechanism configured to convert a rotational driving movement into a translational driven movement in a direction of a first longitudinal axis, such as a threaded mechanism. The spindle nut starts moving axially with respect to the first longitudinal axis by the rotational movement of the spindle. To prevent the spindle nut from rotating together with the spindle and being rotationally stationary, the spindle nut may comprise at least one spindle support pin projecting radially with respect to the first longitudinal axis. The at least one pin may be received in a guiding groove of a housing, in which the spindle nut is received, or of another stationary component. The guiding groove extends in the direction of the axial movement of the spindle nut. By the axial movement of the spindle nut, the transfer mechanism is also moved in the axial direction.

The electro-mechanical actuator assembly may further comprise an electro-mechanical linear actuator configured and controlled to lock the spindle against a rotational movement.

For example, the electro-mechanical linear actuator may be configured to be moved against the spindle to lock or brake the spindle against a rotational movement by providing a form fit and/or force fit connection. However, in other embodiments, such locking may be alternatively or in addition provided by another locking mechanism such as a pneumatic locking mechanism. By locking the spindle against a rotational movement, a force acting on the spindle nut in the axial direction with respect to the first longitudinal axis does not cause the spindle nut or the spindle to move.

Alternatively, an electro-mechanical actuator assembly for actuating a brake actuator may comprise an actuation mechanism configured to convert a rotational driving movement into a translational driven movement in a direction of a first longitudinal axis, and a pushing member operatively coupled to the actuation mechanism to receive and transfer the translational driven movement at least in the direction of the first longitudinal axis, wherein the actuation mechanism is a spindle-spindle nut mechanism, wherein a spindle nut of the actuation mechanism is rotationally supported about the first longitudinal axis while being axially fixed, and wherein a spindle of the actuation mechanism is configured to be axially moveable with respect to the first longitudinal axis while being rotationally fixed.

For example, the pushing member is axially driven by the actuation mechanism in the direction of the first longitudinal direction to move a brake actuator, such as a brake lever, in a braking direction. The brake actuator moved in the braking direction actuates a brake or braking member, such as a brake caliper, e.g. a floating caliper, to brake a brake disc. Since the spindle is not rotationally moveable but axially moveable by the rotation of the spindle nut to actuate the brake actuator via the pushing member, constructional and/or dynamic requirements with respect to the spindle may be reduced.

The term "operatively connected" or "operatively coupled" refers to a direct or indirect connection or coupling. For example, an indirect connection or coupling may comprise at least one intermediate component, e.g. to bridge distances and/or to provide flexible interfaces, arranged between the members to be operatively connected coupled. Accordingly, any described coupling of the pushing member to the spindle is also transferable to a coupling of the pushing member to at least one intermediate component, which is in turn operatively coupled to the spindle. For example, with respect to the pushing member being operatively connected to the spindle, the pushing member may be directly coupled to the spindle by a fixing member, such as a fixing O-ring, or indirectly coupled to the spindle by being coupled to the at least one intermediate component by such fixing member.

In some embodiments, wherein the spindle nut may be rotationally driven to move the spindle axially, the spindle-spindle nut mechanism may also comprise a ball screw. For example, the spindle-spindle nut mechanism is a recirculating ball-spindle based actuator, wherein the spindle is extending in the direction of the first longitudinal axis, preferably coaxially therewith, and may be supported by the spindle nut for an axial movement of the spindle along the first longitudinal axis or an axis in parallel to the first longitudinal axis but keeping the spindle rotationally stationary with respect to the direction of the first longitudinal axis. The spindle starts moving axially with respect to the first longitudinal axis by the rotational movement of the spindle nut. To prevent the spindle from rotating together with the spindle nut and being rotationally stationary, the spindle may comprise at least one spindle support pin projecting radially with respect to the first longitudinal axis. The at least one pin may be received in a guiding groove of a housing, in which the spindle is received, or of another stationary component. The guiding groove extends in the direction of the axial movement of the spindle. By the axial movement of the spindle, the pushing is also moved in the axial direction. However, in other embodiments, the spindle-spindle nut mechanism may also be another actuation mechanism configured to convert a rotational driving movement into a translational driven movement in a direction of a first longitudinal axis, such as a threaded mechanism.

The electro-mechanical actuator assembly may further comprise an electro-mechanical linear actuator configured and controlled to lock the spindle nut against a rotational movement.

For example, the electro-mechanical linear actuator may be configured to be moved against the spindle nut to lock or brake the spindle nut against a rotational movement by providing a form fit and/or force fit connection. However, in other embodiments, such locking may be alternatively or in addition provided by another locking mechanism such as a pneumatic locking mechanism. By locking the spindle nut against a rotational movement, a force acting on the spindle in the axial direction with respect to the first longitudinal axis does not cause the spindle or the spindle nut to move.

With respect to the rotationally driven spindle nut, the spindle nut may be rotationally supported about the first longitudinal axis by at least one bearing arranged at a radial outer surface of the spindle nut.

Due to a braking operation with the pushing member being in engagement with the brake actuator, a force is applied on the pushing member and therefore other subsequent components operatively connected thereto. In particular, since the pushing member may be tilted or at least affected by forces in engagement with the brake actuator by the brake actuator being particularly moved on a curved trajectory, respective forces or force components, respectively, may act on the pushing member and, for example, the spindle and subsequently the spindle nut. Accordingly, the at least one bearing arranged at a radial outer surface, i.e. extending at least partially around an outer radial circumference, of the spindle nut may absorb such forces while guiding the axial movement of the guiding device. The at least one bearing may therefore be supported radially inside a housing at least partially accommodating the spindle nut. Due to the force absorption by the at least one bearing, respective forces may not have sufficient influence to cause deformations or other damages.

For example, the spindle nut is rotationally supported about the first longitudinal axis by at least one spindle nut fixed bearing and at least one spindle nut loose bearing arranged at a radial outer surface of the spindle. Both bearings may be deep-grooved ball bearings, which are also capable of carrying axial forces. Preferably, the spindle nut fixing bearing is configured to carry the axial force transmitted from the pushing member. The at least one bearing, for example, the spindle nut fixing bearing, may also be a combination of more than one bearing, such as an axial thrust ball bearing and one further radial bearing of any kind. In other words, the at least one bearing is configured to take up the axial forces by being provided as a single bearing or a combination of bearings, which provide axial and radial force support.

With respect to the rotationally driven spindle nut, in the direction of the first longitudinal axis, an end portion of the spindle may comprise a spindle recess, preferably in a conical shape tapered from the opening of the spindle recess to the closed end of the spindle recess, configured to at least partially receive the pushing member, wherein the pushing member is preferably operatively connected to the spindle within the spindle recess.

Accordingly, the pushing member at least partially extends into the spindle to allow a more compact design in the direction of the first longitudinal axis. Due to the conical shape of the spindle recess, the spindle recess may provide a centering capability for the pushing member and/or may provide a predetermined tilting capability for the pushing member within the spindle.

With respect to the rotationally driven spindle nut, the spindle may be supported by the spindle nut and/or at least one bearing member over a predetermined support section in the direction of the first longitudinal axis, preferably a predetermined support section at least partially corresponding to a predetermined actuation movement of the spindle for an actuating a brake actuator, and wherein the spindle recess extends in the direction of the first longitudinal axis such that a bending force transmission from the pushing member to the spindle substantially occurs within the predetermined support section.

During a braking operation, the pushing member may transfer bending forces or a bending torque, respectively, on the spindle. By supporting the spindle by the spindle nut and/or at least one bearing member over the predetermined support section, a respective effect on the spindle may be reduced. In particular, the predetermined support section at least partially corresponding to a predetermined actuation movement of the spindle for an actuating a brake actuator allows to support the spindle over at least partially over normal brake operating procedures. The predetermined support section may specifically correspond to a predetermined actuation movement with expectable bending forces equal to or above a predetermined threshold.

In accordance with the above, the spindle recess may extend in the direction of the first longitudinal axis such that a bending force transmission from the pushing member to the spindle substantially occurs within the predetermined support section, in which the spindle is sufficiently supported.

Further, with the pushing member further extending in the spindle, the deflection angle of the pushing member with respect to the first longitudinal axis for the same actuation of the brake actuator and therefore the bending forces are allowed to be decreased. In other words, the more the pushing member extends into the spindle, the less the deflection angle. For example, the pushing member may extend within the spindle recess at least beyond the pivot axis of the brake actuator in the direction away from the brake actuator in the direction of the first longitudinal axis. Alternatively or in addition, the length of the pushing member within the spindle recess is determined such that the pivot axis of the pushing member is located within the predetermined support section, for example, between two bearings axially arranged along the spindle nut, at least at a maximum stroke force or maximum actuator force, respectively, or at a respective force range exceeding a predetermined threshold acting from the pushing member on the spindle.

The spindle may be operatively connected to a driving device, preferably an electric motor, to be driven by the driving device directly or via at least one gear stage arranged between the driving device and the spindle.

Accordingly, the driving device, specifically a rotary driving device, drives the spindle to rotate to axially drive the spindle nut. The driving device may be directly or indirectly connected to the spindle. In this context but also in general, the term "operatively connected" or "operatively coupled" refers to a direct or indirect connection or coupling. For example, an indirect connection or coupling may comprise at least one intermediate component, e.g. to convert a movement and/or to bridge distances, arranged between the members to be operatively connected coupled. With respect to the spindle being operatively connected to the driving device, at least one gear stage may be arranged between the driving device and the spindle. The at least one gear stage may allow to convert a rotational speed of the driving device into a different rotational speed of the spindle. Preferably, the at least one gear stage is configured to lower the rotational speed of the spindle with respect to the rotational speed of the driving device. With the driving device being or at least comprising an electric motor, driving of the spindle can be implemented in an easy manner.

In the alternative embodiment with respect to the spindle nut being rotationally driven to move the spindle axially, the spindle nut may be operatively connected to a driving device, preferably an electric motor, to be driven by the driving device directly or via at least one gear stage arranged between the driving device and the spindle nut.

Accordingly, the driving device, specifically a rotary driving device, drives the spindle nut to rotate to axially drive the spindle. The driving device may be directly or indirectly connected to the spindle nut. In this context but also in general, as previously stated, the term "operatively connected" or "operatively coupled" refers to a direct or indirect connection or coupling. For example, an indirect connection or coupling may comprise at least one intermediate component, e.g. to convert a movement and/or to bridge distances, arranged between the members to be operatively connected or coupled. With respect to the spindle nut being operatively connected to the driving device, at least one gear stage may be arranged between the driving device and the spindle nut. The at least one gear stage may allow to convert a rotational speed of the driving device into a different rotational speed of the spindle nut. Preferably, the at least one gear stage is configured to lower the rotational speed of the spindle nut with respect to the rotational speed of the driving device. With the driving device being or at least comprising an electric motor, driving of the spindle can be implemented in an easy manner.

The driving device may comprise a driving device shaft extending in a direction of a second longitudinal axis, preferably in parallel to the first longitudinal axis.

The second longitudinal axis may be coaxially aligned with the first longitudinal axis, for example in series with the spindle. However, due to spatial constraints for installation or to reduce the size of the electro-mechanical actuator assembly in the direction of the first longitudinal axis, the driving device shaft and therefore the second longitudinal axis may be arranged to extend in parallel to the first longitudinal axis. In such configuration the driving device shaft and the spindle may be operatively coupled via the at least one gear stage, wherein the at least one gear stage may only be provided to transfer the rotational movement of the driving device shaft to the spindle with the same rotational speed but may alternatively convert the rotational speed.

The driving device shaft may at least partially overlap the spindle in the direction of the second longitudinal axis.

By the driving device shaft and the spindle at least partially overlapping, the installation space may be reduced in the direction of the first longitudinal axis resulting in a compact design in such direction. For example, the first longitudinal axis and the second longitudinal axis are arranged in parallel to each other. Further, the driving device shaft and the spindle are arranged such that the shorter one of the driving device shaft or the spindle is not extending beyond the longer one of the driving device shaft or the spindle with respect to the first longitudinal axis or the second longitudinal axis, respectively. For the driving device shaft and the spindle being substantially equal in length with respect to the respective first and second longitudinal axis, preferably none of the driving device shaft and the spindle is extending beyond the other one. The first longitudinal axis and the second longitudinal axis may be arranged to extend in a horizontal plane or a vertical plane upon being installed.

The electro-mechanical actuator assembly may further comprise a locking unit, preferably an electro-mechanical linear actuator or a locking clutch, more preferably a bi-stable brake, configured and controlled to lock the driving device shaft against a rotational movement.

With respect to the spindle being rotationally driven, by locking the driving device shaft, any unintentional movement of the spindle may be prevented. In turn, any rotational movement of the spindle does not cause the driving device shaft operatively connected to the spindle to rotate, which may affect the driving device.

With respect to the spindle nut being rotationally driven, by locking the driving device shaft, any unintentional movement of the spindle nut may be prevented. In turn, any rotational movement of the spindle nut does not cause the driving device shaft operatively connected to the spindle nut to rotate, which may affect the driving device.

The locking unit may be configured to lock by a form fit connection.

Specifically, the locking unit may be configured as a parking brake, specifically a parking brake clutch, coupled to the driving device shaft to lock the driving device rotation in a predetermined position. Preferably, the brake is pretensioned in the predetermined position, so that a parking brake function is realized.

The transfer mechanism may comprise a guiding device configured to at least partially receive and support the pushing member pivot portion and to translationally move the pushing member in accordance with the driven translational movement by the actuation mechanism.

Accordingly, the pushing member may be translationally moved in the direction of the first longitudinal axis by the guiding device at least partially receiving and supporting the pushing member pivot portion to allow the tilting movement of the pushing member. For example, the guiding device may be of an annular shape arranged around the spindle and provides a contact surface for or is operatively connected to the spindle nut to be axially moved along the spindle in correspondence with a respective axial movement of the spindle nut. In other words, the spindle nut may not have to be configured to at least partially receive and support the pushing member pivot potion and a respective translational movement since the guiding device may be easily adapted to both, the pushing member and the spindle nut, similar to an adapter.

The guiding device may comprise at least one axial bearing arranged at a radial outer surface of the guiding device and configured for a guided axial movement of the guiding device with respect to the first longitudinal axis.

Due to a braking operation with the pushing member being in engagement with the brake actuator, a force is applied on the pushing member and therefore other subsequent components operatively connected thereto. In particular, since the pushing member is tilted in engagement with the brake actuator by the brake actuator being moved on a curved trajectory, respective forces or force components, respectively, may act on the pushing member and, for example, the guiding device. Further, the actuation of a brake by the brake actuator may cause respective reaction forces. Specifically, axial forces may therefore occur. Accordingly, the at least one axial bearing arranged at a radial outer surface, i.e. extending at least partially around an outer radial circumference, of the guiding device may absorb axial forces while guiding the axial movement of the guiding device. The at least one axial bearing may therefore be supported radially inside a housing at least partially accommodating the spindle. Due to the force absorption by the at least one axial bearing, axial forces may not have sufficient influence to cause deformations or other damages on the spindle. Accordingly, the spindle design may be optimized without taking care about potential axial forces transferred via the pushing member. Further, the axial bearing or another bearing may also be provided with respect to radial forces.

Respective configurations are not limited to concrete axial bearings. Here, any bearing capable of supporting axial forces may be understood as axial bearing. However, concrete axial bearings may be advantageous to increase the capability of a respective support.

The pushing member comprises a pushing member body with one end comprising the pushing member pivot portion and an opposed end comprising the pushing member connecting portion, preferably an exchangeable pushing member connecting portion, configured to engage with a brake actuator for a respective actuation of the brake actuator.

Accordingly, the pushing member extends along a pushing member longitudinal axis from the one end comprising the pushing member pivot portion to the other end comprising the pushing member connecting portion. For example, the pushing member longitudinal axis may be coaxially with the first longitudinal axis, and the pushing member body extends at least partially circumferentially around the spindle. The pushing member pivot portion may therefore comprise an opening to receive the spindle.

The guiding device as previously described and/or the spindle nut as previously described may be configured to receive and support the at least one pushing member pivot for the tilting movement of the pushing member.

According to the present invention, the force sensor is comprised by the pushing member. The force sensor may, for example, be attached to the pushing member or integrally formed with the pushing member. Thereby, the force sensor is arranged to follow the angular deviations as required by the trajectory as required by the caliper mechanics or the brake actuator, respectively.

In some embodiments, the force sensor is configured to measure the actuating force at least in the direction extending from the pushing member pivot portion to the pushing member connecting portion.

The force sensor may thereby be configured to directly measure the actuating force in an actuating direction along the pushing member longitudinal axis or the first longitudinal axis.

In some embodiments, the force sensor is arranged in or at the pushing member pivot portion or in the vicinity of the pushing member pivot portion, preferably at least partially in a force flow by an actuating force.

The force sensor is thereby arranged that a change in position by a tilting movement of the pushing member is less than, for example, at the pushing member connecting portion. The less the change in position or orientation of the force sensor by a tilting movement, the more the measured force corresponds to the actuating force acting in a direction of the first longitudinal axis. Accordingly, even if the measured force may be a force along the pushing member longitudinal axis the measured force may be substantially correspond to the actuating force acting in the direction of the first longitudinal axis. Even with slight deviations between the force along the pushing member longitudinal axis and the actuating force acting in the direction of the first longitudinal axis, the force measurement may still be sufficient, or a respective offset depending on the tilting may be considered to transform the force along the pushing member longitudinal axis into the actuating force acting in the direction of the first longitudinal axis.

Accordingly, due to the optimal placement of the force sensor and the ability of tilting, disturbances in the force measurement are allowed to be reduced on the full stroke of the brake actuator. Further, the force measurement may be combined with the tilting pushing member connecting portion in a single unit.

With the force sensor being at least partially arranged in the force flow of the actuating force where there are least disturbances present, the arrangement allows for minimizing effect of hysteresis and losses on the force measurement. Preferably, the force sensor is arranged in or at the pushing member at a position, where the actuating force can be measured directly, and forces only act in the pushing member longitudinal axis or the first longitudinal axis.

The exact position of the force sensor depends on the surrounding mechanical parts. In general, the sensor can be placed on the connection member where it is not disturbed by mechanical parts like e.g. a spindle or a brake caliper.

In some embodiments, the force sensor is a strain gauge, preferably arranged on a surface of the pushing member.

The strain gauge as force sensor may be easily oriented on the pushing member to allow detecting the actuating force in the direction of the longitudinal axis pushing member longitudinal axis or the first longitudinal axis.

In some embodiments, the force sensor is a load cell, preferably integrated into the pushing member.

The pushing member may further comprise a signal receiver arranged, for example, at an outer circumference of the pushing member to receive signals of the load cell according to the detected force. The pushing member may alternatively provide a signal line from the load cell to connect to a respective signal supply line.

In some embodiments, at least one of the pushing member pivot portion and the pushing member connecting portion is at least partially of a spherical shape.

For example, the pushing member connecting portion may be at least partially of a spherical shape, e.g. a positive hemisphere configured to be received by a corresponding negative hemisphere portion of the brake actuator to receive the pushing member connecting portion for engagement. Due to the spherical interface the contact surfaces of the positive hemispherical pushing member connecting portion and the negative hemispherical portion of the brake actuator may slide on each other during the movement along the curved trajectory without blocking such movement. However, the pushing member connecting portion is not restricted to a hemispherical shape and may provide another shape in accordance with the receiving portion of the brake actuator for an engagement with the pushing member connecting portion. Accordingly, it may be advantageous to allow the pushing member connecting portion to be exchanged to adapt the pushing member connecting with respect to different shapes and/or dimensions.

Alternatively or in addition, the pushing member pivot portion may comprise at least one pushing member pivot configured as a cylinder portion and/or a spherical portion.

For example, the pushing member pivot formed as a cylinder portion may be received in a corresponding cylinder support allowing the pushing member to rotate about the cylinder axis. The cylinder portion may be formed by a cylinder or at least a section of a cylinder sufficient to allow a predetermined tilting movement of the pushing member. The at least one cylinder portion may extend in the radial direction outward from the pushing member pivot portion with respect to the pushing member longitudinal axis. Preferably, the pushing member pivot portion comprises at least two pushing member pivots as cylinder portions evenly distributed along the radial surface of the pushing member pivot portion with respect to the pushing member longitudinal axis. Due to the at least two pushing member pivots as cylinder portions, the pushing member may be more stably supported.

Alternatively or in addition, the pushing member pivot may comprise a spherical portion forming a ball joint or at least a ball joint section. Accordingly, the spherical portion may only be partially spherical. Due to the ball joint or ball joint section, respectively, the degrees of freedom for a tilting movement may be increased. In particular, the pushing member may thereby be rotatable in any direction as long as not interfering with other components. The spherical portion may be formed with the pushing member longitudinal axis as symmetry axis.

Accordingly, the guiding device and/or the spindle nut may comprise at least one pushing member pivot receiving portion, such as a recess or another corresponding contour, to receive and support the at least one pushing member pivot.

Specifically, with the pushing member pivot portion forming at least a partially spherical surface a ball joint or at least ball joint section instead of a hinge type solution, the spherical interface may compensate angular deviations in at least one direction. This may ensure that only axial loads are transferred between the actuation mechanism and the brake actuator.

Further, the guiding device may comprise a first guiding device member and a second guiding device member, wherein the first guiding device member and the second guiding device member are connectable to each other to support the at least one pushing member pivot for the tilting movement of the pushing member.

Accordingly, the pushing member receiving portion may be formed by connecting the first guiding device member and the second guiding device member. For example, the second guiding device member may comprise a cylindrical pin extending radial outward with respect to the pushing member longitudinal axis and the pushing member pivot is formed as a half-cylindrical arc with the inner contour of the arc corresponding to the outer contour of the cylindrical pin. The half-cylindrical arc is placed on the cylindrical pin, and the first guiding member is connected to the second guiding device member. The first guiding device member may comprise at least one first guiding device member recess in the outer circumference extending in the axial direction, wherein a closed end of the first guiding device member recess provides a contour corresponding to the outer contour of the half-cylindrical arc. The first and second guiding device members are configured and connected such that the half-cylindrical arc of the pushing member pivot is sandwiched between the cylindrical pin of the second guiding device member and the closed end of the first guiding device member. This allows a simplified assembling. Further, splitting the guiding device into at least the first guiding device member and the second guiding device member may also allow an exchange of the pushing member and/or the adaption to different pushing members.

Alternatively or in addition, the pushing member pivot may be held in the pushing member receiving portion of one of the first and second guiding device members by connecting the other one of the first and second guiding device members to the one of the first and second guiding device members.

In some embodiments, the electro-mechanical actuator assembly further comprises a control device operatively connected to the force sensor to receive force sensor signals from the force sensor.

For example, at least one control device may be an electronic control unit.

In this context, the driving device shaft and the spindle may extend substantially in one plane, and the at least one control device may be arranged laterally to the plane and operatively connected to the driving device and/or the locking unit as previously described.

Accordingly, the control device may be placed sidewise on the electro-mechanical actuator assembly. This allows the installation space to be further reduced in the direction of the first longitudinal axis.

Further, the electro-mechanical actuator assembly may comprise at least two control devices arranged on opposite sides of the plane.

For example, the control devices may thereby form a control unit spilt in two parts. The control devices may be arranged that the electro-mechanical actuator assembly remains quasi-symmetric. Preferably the symmetry plane of the arrangement of the control devices corresponds to a brake caliper symmetry plane. The brake caliper symmetry plane is a symmetry plane substantially perpendicular to plane in which the braking surfaces of the brake caliper extend or a braking plane, respectively.

At least one of the at least two control devices may be a control unit configured to control operatively connected components, and the other at least one of the at least two control devices is a power control unit configured to control a power supply to operatively connected components.

Accordingly, in the event of any failure of one of the at least two control devices, a redundancy to provide respective back-up functionalities may be easier implemented by separating types of functionalities to be assigned to one of the control devices or the other.

The control device or at least one of the control devices may by operatively connected to the force sensor by a signal supply line via wireless data transfer. Accordingly, the detected force may be directly used by the at least one control device or may be further processed before a subsequent use. Processing the received force signal by the least one control device may be a filtering or noise reduction of the force signal and/or a transformation of the force signal into an actuating force, e.g. by further consideration of angular deviations due to tilting of the pushing member. Such considerations may be derived from knowing about a stroke position of the pushing member representing a respective tilting of the pushing member.

In some embodiments, the control device is configured to provide an actuating force feedback control.

For example, an actual actuating force feedback control may be based on the detected actual actuating force or the actual actuating force feedback control may only be adapted in the event of the detected actual actuating force exceeding or falling below a predetermined actuating force threshold. The detected actual actuating force exceeding or falling below a predetermined actuating force threshold may be further linked to the respective difference occurring over a predetermined period of time and/or with a predetermined frequency for the avoidance of adapting the control just because of an outlier.

In a further aspect, the present invention relates to a brake assembly for a vehicle. The brake assembly comprises at least one electro-mechanical actuator assembly as previously described, and at least one brake actuator configured to actuate or release a brake upon being actuated by the electro-mechanical actuator assembly.

As previously described, the at least one brake actuator may be a brake lever to pivot about a pivot inclined, preferably substantially perpendicular, to the first longitudinal axis.

In some embodiments, the brake assembly further comprises a brake caliper actuatable by the at least one brake actuator, wherein the at least one brake caliper provides a braking plane extending in a direction substantially perpendicular to a braking movement, and wherein the at least one electro-mechanical actuator assembly is arranged with the first longitudinal axis substantially perpendicular to the braking plane, preferably in the brake caliper symmetry plane, with the at least one brake actuator disposed between the at least one electro-mechanical actuator assembly and the brake caliper. The braking plane corresponds to the plane in which the braking surfaces of the brake caliper extend.

Any feature described with respect to the electro-mechanical actuator assembly is also applicable to the brake assembly. In turn, any feature described for the brake assembly is also applicable to the electro-mechanical actuator assembly.

In some embodiments, a control device of the brake assembly, preferably the control device of the electro-mechanical actuator assembly as previously described, is configured to detect a separation of the pushing member connecting portion from the brake actuator based on an unexpected decrease in the actuating force detected by the force sensor.

Accordingly, a respective control device may be a control device of the brake assembly other than the control device of the electro-mechanical actuator assembly as previously described. In this context, the control device of the brake assembly other than the control device of the electro-mechanical actuator assembly as previously described may be configured to replace or substitute the control device of the electro-mechanical actuator assembly as previously described.

Further, with respect to the detection of a separation of the pushing member connecting portion from the brake actuator, the force sensor may therefore not only allow to provide data for an accurate brake control but may also allow the detection of the separation of the pushing member connecting portion from the brake actuator, to avoid misinterpretation of the received force signals. The separation of the pushing member connecting portion from the brake actuator is an erroneous condition, when a movement of the pushing member in a direction away from the brake actuator is faster than the corresponding tilting movement, i.e. the circumferential velocity, of the brake actuator. In such event, the pushing member connecting portion may be detached from the engaging surface of the brake actuator. Similar, the pushing member pivot portion may be separated from the actuation mechanism when the actuation mechanism moves faster than a follow-up movement of the pushing member.

Accordingly, the separation of the pushing member from the brake actuator and/or the actuation mechanism may result in a detected force being zero. Similarly, the beginning of such separation may result in a respective decrease of the detected force. In such event, for example as part of an actuating force feedback control, the control device may expect the detected force to decrease continuously, e.g. according to a predetermined function, in the event of releasing the brake actuator. Therefore, if the decrease in the detected force drops suddenly to zero or starts to deviate from the predetermined function at least by a predetermined value, the control device determines such decrease as an unexpected decrease and therefore as a separation of the pushing member.

The control device may subsequently adapt the actuating force feedback control in terms of not considering the decrease detected force as detected force to require an increase of the actuating force to compensate for a respective difference and/or may slow down or stop a movement of the actuation mechanism.

Any features or functionalities relating to the electro-mechanical actuator assembly with respect to the brake assembly are also applicable to the brake assembly. In turn, any features or functionalities relating to the brake assembly described with respect to the electro-mechanical actuator assembly are also applicable to the electro-mechanical actuator assembly.

In a further aspect, the present invention relates to a vehicle comprising at least one electro-mechanical actuator assembly as previously described and/or a brake assembly as previously described, wherein the vehicle is preferably a commercial vehicle and/or an electrically powered or hybrid vehicle.

For example, the commercial vehicle may be a truck, a trailer, a bus and/or a combination of a towing vehicle and a trailer. Commercial vehicles and electrically powered or hybrid vehicles provide severe installation space constraints, which benefit from the previously described electro-mechanical actuator assembly and/or brake assembly.

Any features or functionalities relating to the electro-mechanical actuator assembly or the brake assembly, respectively, with respect to the vehicle are also applicable to the vehicle. In turn, any features or functionalities relating to the vehicle described with respect to the electro-mechanical actuator assembly or the brake assembly, respectively, are also applicable to the electro-mechanical actuator assembly or the brake assembly, respectively.

In a further aspect, the present invention relates to a method for a force feedback control for an electro-mechanical actuator assembly as previously described and/or a brake assembly as previously described. The method comprises the steps of:
detecting an actuating force for a brake actuator by the force sensor, and
controlling the actuation mechanism in accordance with the detected actuating force.

As already addressed with respect to the electro-mechanical actuator assembly and the brake assembly, the detection of the actuating force for the brake actuator by the force sensor allows a force feedback control with sufficient accuracy.

In some embodiments, the controlling of the actuation mechanism considers a separation of the pushing member connecting portion from the brake actuator based on an unexpected decrease in the actuating force detected by the force sensor.

The detection of the separation of the pushing member allows control of the electro-mechanical actuator assembly and/or the brake assembly as previously described.

Any features or functionalities relating to the electro-mechanical actuator assembly, the brake assembly or the vehicle, respectively, with respect to the method are also applicable to the method. In turn, any features or functionalities relating to the method described with respect to the electro-mechanical actuator assembly, the brake assembly or the vehicle, respectively, are also applicable to the electro-mechanical actuator assembly, the brake assembly or the vehicle, respectively.

In a further aspect, the present invention relates to a computer program product comprising instructions which, when the program is executed by a computer, cause the computer to carry out the method as previously described.

The computer may be a control device comprised by or connected to the electro-mechanical actuator assembly and/or the brake assembly.

In a further aspect, the present invention relates to a computer-readable storage medium comprising instructions which, when executed by a computer, cause the computer to carry out the method as previously described.

Further advantages, aspects and details of the invention are subject to the claims, the following description of exemplary embodiments applying the principles of the invention, and the respective exemplary drawings.
Fig. 1 is a schematic cross-sectional representation of a brake assembly comprising an electro-mechanical actuator assembly according to an exemplary embodiment of the present invention;
Fig. 2 is a schematic representation of a pushing member according to Fig. 1 comprising an exemplary embodiment of a force sensor;
Fig. 3 is a schematic representation of another exemplary embodiment of a force sensor applicable to the pushing member of Fig. 1;
Fig. 4 is another schematic representation in another perspective of the brake assembly of Fig. 1;
Fig. 5 is a schematic representation of an exemplary control device the present invention is applicable to; and
Fig.6 is a schematic representation of a force determination unit the present invention is applicable to.

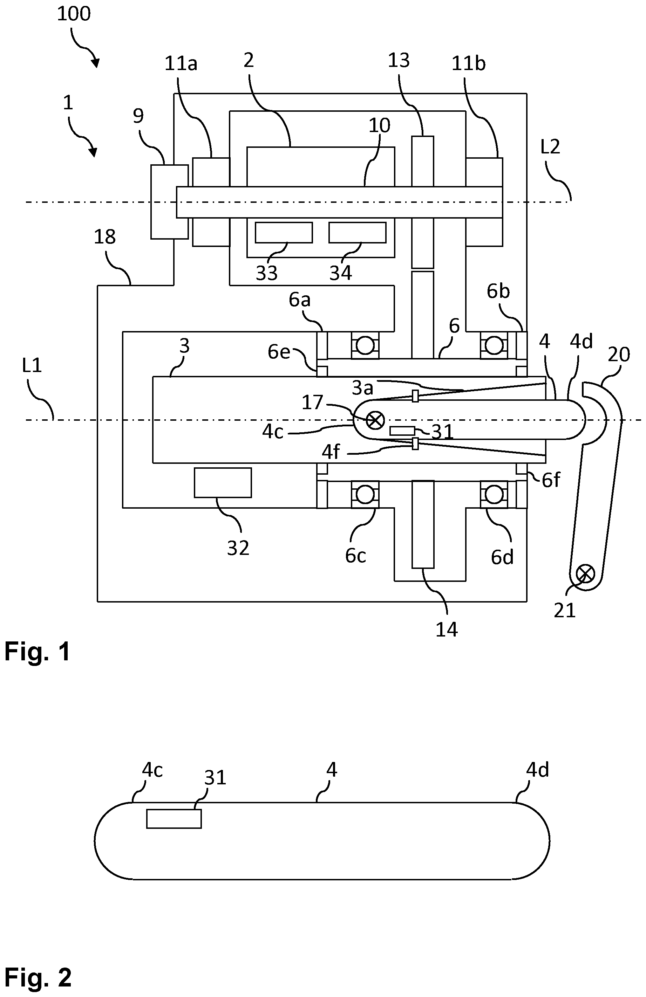

Fig. 1 shows a schematic cross-sectional representation of a brake assembly 100 comprising an electro-mechanical actuator assembly 1 according to an exemplary embodiment of the present invention.

The electro-mechanical actuator assembly 1 comprises a spindle 3 and a spindle nut 6 configured as a recirculating ball spindle mechanism as an exemplary embodiment of an actuation mechanism configured to convert a rotational driving movement into a translational driven movement in a direction of a first longitudinal axis L1. The first longitudinal axis L1 corresponds to the longitudinal axis of the spindle 3. Here, the spindle nut 6 is driven by an electric motor 2 as driving device comprising a motor shaft 10 as driving device shaft. The motor shaft 10 extends in a direction along a second longitudinal axis L2. The first longitudinal axis L1 is parallel to the second longitudinal axis L2. Further, the motor shaft 10 and the spindle 3 respectively arranged in parallel to each other are positioned such that the shorter motor driving shaft 10 does not extend with one end beyond the spindle 3 in at least one relative position to achieve a compact design in the direction of the first longitudinal axis L1 or the second longitudinal axis L2, respectively. In principle, for a compact design, the motor shaft 10 and the spindle 3 are preferably arranged to require minimum space in the direction of the first longitudinal axis L1 or the second longitudinal axis L2, respectively. To drive the spindle nut 6 by the electric motor 2, the motor shaft 10 comprises a drive gear 13 extending radially with respect to the second longitudinal axis L2, and the spindle nut 6 comprises a driven gear 14 extending radially with respect to the first longitudinal axis L1. The drive gear 13 and the driven gear 14 are positioned along the motor shaft 10 and the spindle nut 6, respectively, such that they are in engagement with each other to form a gear stage. In the exemplary embodiment, the gear stage is configured to convert the rotational speed of the motor shaft 10 in a lower rotational speed of the spindle nut 6.

The electric motor 2 and the motor shaft 10 are accommodated in a housing 18. The motor shaft 10 is rotationally supported in the housing 18 by motor shaft bearing 11a, 11b, each of which is disposed on one end of the motor shaft 10. Further, the motor shaft 10 can be locked against a rotational movement by a bi-stable brake 9 as locking unit.

The spindle nut 6 is also accommodated in the housing 18, and rotationally supported by a spindle nut fixing bearing 6c and a spindle nut loose bearing 6d. The spindle nut fixing bearing 6c is configured to allow the spindle nut 6 to rotate but prevent the spindle nut 6 from an axial movement with respect to the first longitudinal axis L1. In the exemplary embodiment, the spindle nut loose bearing 6d provides a further support to rotate the spindle nut 6 in a stable position.

Further, two radial seals 7a, 7b are arranged circumferentially around the spindle 6. The radial seals 6a, 6b are arranged at opposed ends of the spindle nut 6 in the direction of the first longitudinal axis L1 with the spindle nut fixing bearing 6c, the spindle nut loose bearing 6d, the driven gear 14, the drive gear 13, the motor shaft 10 and the electric motor 2 being sealed in a space of the housing therebetween.

The spindle 3 is configured to be axially moved by the spindle nut 6 with respect to the first longitudinal axis L1. To prevent the spindle 3 from a rotational movement, the spindle nut comprises support pins (not shown) extending radially outward in opposing directions from the spindle 3 with respect to the first longitudinal axis L1. The support pins extend into respective guiding grooves (not shown) to guide the support pins and thereby the spindle 3 during an axial movement in the axial movement direction, while preventing the spindle 3 to rotate. Two wipers 6e, 6f are arranged at opposed ends of the spindle nut 3 in the direction of the first longitudinal axis L1. Each of the two wipers 6e, 6f extends circumferentially between an inner diameter of the spindle nut 6 and an outer diameter of the spindle 3.

The spindle 3 comprises a spindle recess 3a in a conical shape. However, in other embodiments, the spindle recess 3a may be of a different shape, e.g. in a shape of a triangular slit, or a rectangular volume. In the exemplary embodiment, the conical shape of the spindle recess 3a provides an opening at the end of the spindle 3 facing toward the brake lever 20, while the spindle recess 3a is tapered toward the closed end portion facing away from the brake lever 20 in the direction of the first longitudinal axis L1. A pushing member 4 is partially received within the spindle recess 3a, and affixed thereto by a fixing member 4f, here, a fixing O-ring. The pushing member 4 substantially extends in the direction of the first longitudinal axis L1 and is tiltable about a pivot axis 17, which extends substantially perpendicular to the first longitudinal axis L1 and in parallel to a pivot axis 21 of the brake lever 20. Specifically, the pushing member 4 extends along a pushing member longitudinal axis from a spherically shaped pushing member pivot portion 4c to a spherically shaped pushing member connecting portion 4c to engage with the brake lever 20. The spherically shaped pushing member pivot portion 4c corresponds to the contour of the closed end portion of the spindle recess 3a. Accordingly, the pushing member 4 is arranged within the spindle recess 3a, such that the pushing member 4 is allowed to tilt about the pivot axis 17, wherein the spherically shaped pivot portion 4c slides along the corresponding contour of the closed end portion of the spindle recess 3a in a guided manner. The tilting movement of the pushing member 4 or the deflection from the first longitudinal axis L1 is restricted by the conical shaped circumferential wall of the spindle recess 3a extending from the closed end portion to the opening of the spindle recess 3a.

For a braking operation, the electric motor 2 drives the spindle nut 6 via the motor shaft 10 and the gear stage 13, 14 to rotate. Accordingly, the spindle 3 is translationally moved in the direction of the first longitudinal axis L1 toward the brake lever 20. Accordingly, the pushing member 4 operatively coupled to the spindle 3 is moved toward the brake lever 20. The end of the pushing member 4 facing the brake lever 20 engages with the brake lever 20, which is thereby rotated about the pivot axis 21 upon further movement of the pushing member 4 in the direction of the first longitudinal axis L1. The pushing member connecting portion 4d for engagement with the brake lever 20 provides a spherical shape corresponding to a spherically shaped concave portion of the brake lever 20. Due to the brake lever 20 pivoting about the pivot axis 21 in response of being driven by the pushing member 4, the spherically shaped concave portion of the brake lever 20 follows a curved trajectory. Since the pushing member 4 is tiltable about the pivot axis 17, the pushing member connecting portion 4d is allowed to follow the curved trajectory of the braking lever 20.

To reduce bending forces on the spindle 3, which may occur during a braking operation due to the engagement of the pushing member 4 with the brake lever 20 and respective reaction forces, the pushing member 4 and the pivot axis 17 of the pushing member 4, respectively, extends deeply into the spindle 3 in accordance with a respective length of the spindle recess 3a in the direction of the first longitudinal axis L1. Further, to provide sufficient support of the spindle 3 with respect to occurring bending forces, the closed end portion of the spindle recess 3a and the pivot axis 17 of the pushing member 4, respectively, are located, such there are moved between the spindle nut fixed bearing 6c and the spindle nut loose bearing 6d during a braking operation.

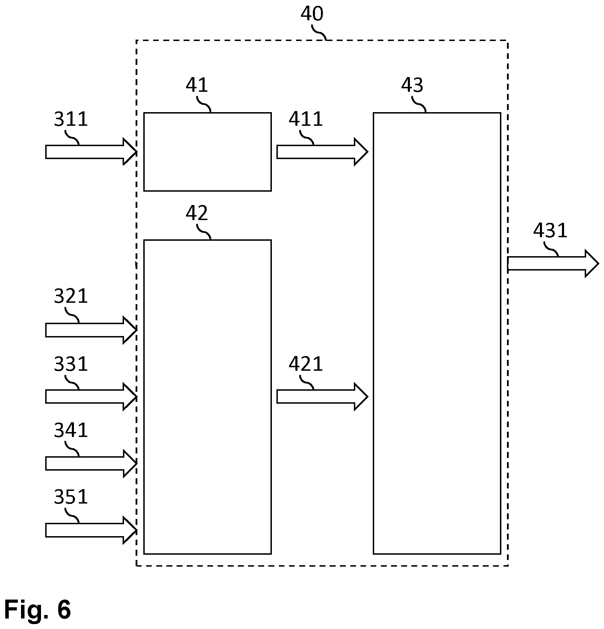

The electro-mechanical actuator assembly 1 further comprises a force sensor 31, a stroke sensor 32, a motor position sensor 33 and a motor temperature sensor 34. The force sensor 31 is configured to measure the actuator force and is comprised by the pushing member 4. The force sensor 31 is arranged in the vicinity of the pushing member pivot portion 4c. The force sensor 31 is configured to transmit the measured force as a force sensor signal 311 (Fig. 6). The stroke sensor 32 is arranged in the vicinity of the spindle 3 to measure a stroke of the spindle 3. The stroke sensor 32 is configured to transmit the measured stroke as a strike sensor signal 321 (Fig. 6). The motor position sensor 33 and the motor temperature sensor 32 are arranged within the electric motor to measure a motor position and motor temperature, respectively. The motor position sensor 33 is configured to transmit the measured motor position as a motor position sensor signal 331 (Fig. 6). The motor temperature sensor 34 is configured to transmit the measured motor temperature as a motor temperature sensor signal 341 (Fig. 6).

Fig. 2 shows a schematic representation of the pushing member 4 according to Fig. 1 comprising an exemplary embodiment of a force sensor 31. Here, the force sensor 31 is a strain gauge arranged on a surface of the pushing member 4 in the vicinity of the pushing member connecting portion 4c. The force sensor 31 is arranged to detect the actuating force in a direction of the pushing member longitudinal axis.

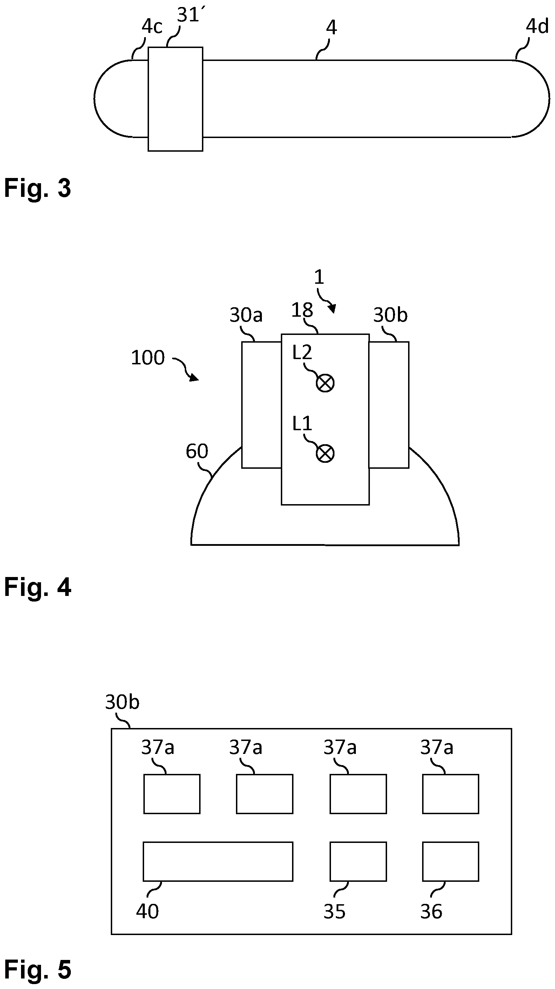

Fig. 3 shows a schematic representation of another exemplary embodiment of a force sensor 31' applicable to the pushing member 4 of Fig. 1. Here, the force sensor 31" is a load cell arranged around a circumferential surface of the pushing member 4 in the vicinity of the pushing member pivot portion 4c.

The diameter of a cylindrical load cell is usually larger compared to the push rod without one. These load cells usually have threaded mechanical interfaces, where two halves of a push rod can be mounted. However any other arrangement can be suitable as long as the push rod contains a sensor for force measurement.

Fig. 4 shows another schematic representation in another perspective of the brake assembly 100 of Fig. 1.

Besides the electro-mechanical actuator assembly 1 and the brake lever 20, which is not visible in the given perspective, already previously described, the brake assembly 100 further comprises a brake caliper 60. In the exemplary embodiment, the brake caliper 60 is a floating caliper configured to be actuated by the brake lever 20 arranged between the electro-mechanical actuator assembly 1 and the brake caliper 60. The braking surfaces of the brake caliper 60 extend in a plane substantially perpendicular to the first longitudinal axis L1. Further, in the exemplary embodiment, the electro-mechanical actuator assembly 1 comprises two electronic control units 30a, 30b as control devices. The electronic control units 30a, 30b are attached to the housing 18 on opposed lateral sides of the housing 18. The lateral sides of the housing extend in planes laterally to a plane comprising the first longitudinal axis L1 and the second longitudinal axis L2. One electronic control unit 30a is a control unit configured to control operatively connected components of the electro-mechanical actuator assembly 1, and the other electronic control unit 30b is a power control unit configured to control a power supply to operatively connected components of the electro-mechanical actuator assembly 1. In the brake assembly 100 the electro-mechanical actuator assembly 1 is arranged such that the first longitudinal axis L1 and the second longitudinal axis L2 are oriented in a vertical plane.

Fig. 5 shows a schematic representation of an exemplary control device 30b the present invention is applicable to.

The control device 30b is an electronic control unit and configured to control a power supply to operatively connected components of the electro-mechanical actuator assembly 1 as previously described. The control device 30b comprises different ECU members 37a for the control of the power supply, a motor current sensor 35 and an ECU temperature sensor 36. The control device 30b further comprises a force determination unit 40 as part of a force feedback control. Specifically, the force determination unit 40 received the force sensor signal 311 to determine an actual actuating force as input for the force feedback control.

Fig.6 shows a schematic representation of a force determination unit 40 the present invention is applicable to. The force determination unit 40 comprises a force acquisition unit 41, a force estimation unit 42 and a force feedback unit 43.

The force acquisition unit 41 receives the force sensor signals 311 and applies a noise reduction procedure on the force sensor signals 311 to provide acquired force signals 411.

In parallel, the force estimation unit 42 receives stroke sensor signals 321, motor position sensor signals 331, motor temperature position signals 341, and motor current sensor signals 351 from the motor current sensor 35. The force estimation unit 42 calculates an actual motor current based on the actual motor position sensor signal 331, the actual motor temperature position signal 341, and the actual motor current sensor signal 351, and provides an estimated force signal 421 based on a nonlinear function between the calculated actual motor current and the actual stroke sensor signal 321. The acquired force signals 411 and the estimated force signals 421 are transferred to the force feedback unit 43. The force feedback unit 43 determines whether an actual acquired force signal 411 is available. If not, the force feedback unit 43 determines the actual estimated force signal 421 as actual force feedback signal 431. If the actual acquired force signal 411 is available, the force feedback unit 43 further determines whether the actual acquired force signal 411 is plausible by comparing the actual acquired force signal 411 with the actual estimated force signal 421. If the difference between the actual acquired force signal 411 and the actual estimated force signal 421 is within a predetermined range, the actual acquired force signal 411 is determined as plausible. Accordingly, the force feedback unit 43 determines the actual acquired force signal 411 as actual feedback signal 431. However, if the force feedback unit 43 determines the actual acquired force signal 411 as implausible, the force feedback unit 43 determines the actual estimated force signal 421 as actual force feedback signal 431. Actual force feedback signals 431 are transmitted to the control device 30a as an example of a control device comprising a closed-loop force control.

The invention has been described with respect to exemplary embodiments. However, the invention is not limited to the exemplary embodiments.

### LIST OF REFERENCE SIGNS

- 1: electro-mechanical actuator assembly
- 2: electric motor (driving device)
- 3: spindle
- 3a: spindle recess
- 4: pushing member
- 4c: pushing member pivot portion
- 4d: pushing member connecting portion
- 4f: fixing member
- 6: spindle nut
- 6a, 6b: radial seal
- 6c: spindle nut fixing bearing
- 6d: spindle nut loose bearing
- 6e, 6f: wiper
- 9: bi-stable brake (locking unit)
- 10: motor shaft (rotor)
- 11a, 11b: motor shaft bearing
- 13: drive gear
- 14: driven gear
- 17: pivot axis
- 18: housing
- 20: brake lever (brake actuator)
- 21: pivot axis
- 30a, 30b: electronic control unit (control device)
- 31, 31': force sensor
- 32: stroke sensor
- 33: motor position sensor
- 34: motor temperature sensor
- 35: motor current sensor
- 36: ECU temperature sensor
- 37a: ECU member
- 40: force determination unit
- 41: force acquisition unit
- 42: force estimation unit
- 43: force feedback unit
- 60: brake caliper
- 100: brake assembly
- 311: force sensor signal
- 321: stroke sensor signal
- 331: motor position sensor signal
- 341: motor temperature sensor signal
- 351: motor current sensor signal
- 411: acquired force signal
- 421: estimated force signal
- 431: force feedback signal
- L1: first longitudinal axis
- L2: second longitudinal axis

## Claims

1. Electro-mechanical actuator assembly (1) for actuating a brake actuator (20), comprising:
an actuation mechanism (3, 6) configured to convert a rotational driving movement into a translational driven movement in a direction of a first longitudinal axis (L1), and
a transfer mechanism (4) operatively coupled to the actuation mechanism (3, 6) to receive and transfer the translational driven movement at least in the direction of the first longitudinal axis (L1),
wherein the transfer mechanism (4) comprises at least one pushing member (4) having a pushing member pivot portion (4c) configured to allow a tilting movement of the pushing member (4) about a pivot axis (17) inclined to the first longitudinal axis (L1) and a pushing member connecting portion (4d) configured to connect with or contact the brake actuator (20), the pushing member (4) extends from the pushing member pivot portion (4c) to the pushing member connecting portion (4d), and
wherein the pushing member (4) comprises a force sensor (31, 31 ') configured to detect an actuating force in at least one direction.

2. Electro-mechanical actuator assembly (1) according to claim 1, wherein the force sensor (31, 31') is configured to measure the actuating force at least in the direction extending from the pushing member pivot portion (4c) to the pushing member connecting portion (4d).

3. Electro-mechanical actuator assembly (1) according to claim 1 or 2, wherein the force sensor (31, 31') is arranged in or at the pushing member pivot portion (4c) or in the vicinity of the pushing member pivot portion (4c), preferably at least partially in a force flow by an actuating force.

4. Electro-mechanical actuator assembly (1) according to any one of the preceding claims, wherein the force sensor (31) is a strain gauge, preferably arranged on a surface of the pushing member (4).

5. Electro-mechanical actuator assembly (1) according to any one of the preceding claims, wherein the force sensor (31') is a load cell, preferably integrated into the pushing member (4).

6. Electro-mechanical actuator assembly (1) according to any one of the preceding claims, wherein at least one of the pushing member pivot portion (4c) and the pushing member connecting portion (4d) is at least partially of a spherical shape.

7. Electro-mechanical actuator assembly (1) according to any one of the preceding claims, wherein the electro-mechanical actuator assembly (1) further comprises a control device (30a, 30b) operatively connected to the force sensor (31, 31") to receive force sensor signals from the force sensor (31, 31").

8. Electro-mechanical actuator assembly (1) according to claim 7, wherein the control device (30a, 30b) is configured to provide an actuating force feedback control.

9. Brake assembly (100) for a vehicle, comprising
at least one electro-mechanical actuator assembly (1) according to any one of the preceding claims, and
at least one brake actuator (20) configured to actuate or release a brake upon being actuated by the electro-mechanical actuator assembly (1).

10. Brake assembly (100) according to claim 9, wherein a control device of the brake assembly (100), preferably the control device (30a, 30b) of the electro-mechanical actuator assembly (1) according to claim 8 or 9, is configured to detect a separation of the pushing member connecting portion (4d) from the brake actuator (20) based on an unexpected decrease in the actuating force detected by the force sensor (31, 31").

11. Vehicle comprising at least one electro-mechanical actuator assembly (1) according to any one of the claims 1 to 8 and/or a brake assembly (100) according to claim 9 or 10, wherein the vehicle is preferably a commercial vehicle and/or an electrically powered or hybrid vehicle.

12. Method for a force feedback control for an electro-mechanical actuator assembly (1) according to any one of the claims 1 to 8 and/or a brake assembly (100) according to claim 9 or 10, comprising the steps of:
detecting an actuating force for a brake actuator (20) by the force sensor (31, 31 "), and
controlling the actuation mechanism (3, 6) in accordance with the detected actuating force.

13. Method according to claim 12, wherein the controlling of the actuation mechanism (3, 6) considers a separation of the pushing member connecting portion (4d) from the brake actuator (20) based on an unexpected decrease in the actuating force detected by the force sensor (31, 31 ").

14. Computer program product comprising instructions which, when the program is executed by a computer, cause the computer to carry out the method according to claim 12 or 13.

15. Computer-readable storage medium comprising instructions which, when executed by a computer, cause the computer to carry out the method according to claim 12 or 13.
